# EUROPÄISCHE PATENTANMELDUNG

(11) **EP 4 140 642 A1**
(43) Veröffentlichungstag der Anmeldung: **01.03.2023**
(21) Anmeldenummer: 22191669.5
(22) Anmeldetag: 23.08.2022
(51) Int. Cl.: B23Q 11/08

(54) **SCHUTZABDECKUNG**

(30) Priorität: 27.08.2021 DE 202021104637 U; 01.10.2021 DE 202021105325 U
(71) Anmelder: Möller Werke GmbH, 33649 Bielefeld (DE)
(72) Erfinder: Guntermann, Janik, 33647 Bielefeld (DE); Redeker, Bernhard, 33758 Schloß Holte-Stukenbrock (DE)
(74) Vertreter: Schober, Mirko

(57) **Zusammenfassung**

Eine Schutzabdeckung (1), umfasst eine Vielzahl an Abschirmelementen (2-7), die insbesondere im Querschnitt jeweils L-förmig ausgebildet sind. Die Abschirmelemente weisen jeweils einen ersten Schenkel (2a-7a) und wenigstens einen gegenüber ihrem ersten Schenkel (2a-7a) abgewinkelten zweiten Schenkel (2b-7b) auf. Die zweiten Schenkel (2b-7b) sind so mit ihren Deckflächen einander gegenüberliegend angeordnet, dass die ersten Schenkel (2a-7a) der unmittelbar zueinander benachbarten Abschirmelemente (2-7), welche über ihre zugehörigen zweiten Schenkel (2b-7b) durch diese relativ zueinander beweglich miteinander koppelnde Verbinder (9.1-9.3) verkettet sind, sich zumindest teilweise unter Ausbildung einer längenveränderlichen Abschirmfläche (8) überdecken. Wenigstens einer der Verbinder (9.1-9.3) weist mindestens eine Biegelinie (F1-F8, F10-F25, F30-F35) auf, entlang der zumindest ein Teil dieses Verbinders (9.1-9.3) gegenüber einem anderen Teil desselben Verbinders (9.1-9.3) schwenkbar ist. Jeder der Verbinder (9.1-9.3) besitzt einen mit dem zweiten Schenkel (2b-7b) eines Abschirmelements (2-7) verbundenen Mittelsteg (9a), welcher mindestens zwei an diesem schwenkbar angeordnete Arme (9c-9l) aufweist, wobei wenigstens ein Arm (9c-9l) eines einem Abschirmelement (2-7) zugehörigen Verbinders (9.1-9.3) mit dem Arm (9c-9l) oder dem Mittelsteg (9a) eines einem anderen, insbesondere unmittelbar benachbarten, Abschirmelement (2-7) zugehörigen Verbinders (9.1-9.3) verbunden ist.

## Beschreibung

Die Erfindung betrifft eine Schutzabdeckung nach dem Oberbegriff von Anspruch 1.

Neben dem rein optischen Verdecken dienen Schutzabdeckungen auch als physische Begrenzung. Aufgrund ihrer mechanischen Belastbarkeit werden sie vorrangig zur Abschirmung beweglicher Maschinenbauteile eingesetzt. Dabei erfüllen sie primär die sich bereits aus Sicherheitsgründen oder/und dem Schutz vor Verschmutzungen ergebenden Aufgaben, wie etwa als bauliche Barriere gegenüber Spänen, Schmierstoffen oder Kühlmitteln. Je nach Einsatzzweck können diese aus einem Innen- sowie Außenfalten aufweisenden Faltenbalg bestehen oder einen daraus gebildeten längenveränderbaren Basiskörper umfassen. Ohne einen Faltenbalg auskommende Ausführungsformen (faltenbalglos) weisen sich zumindest teilweise überdeckende und zumeist quer zu ihrer Längsrichtung relativ zueinander bewegliche Abschirmelemente auf. Bei den Abschirmelementen kann es sich beispielsweise um Lamellen aus Blech oder einem anderen geeigneten Material handeln. Verbundwerkstoffe aus wenigstens zwei voneinander unterschiedlichen Materialien sind ebenfalls möglich.

Die eingesetzten Abschirmelemente weisen eine durchgehende oder zumindest abschnittsweise im Querschnitt L-förmige Ausgestaltung auf. Der L-förmige Querschnitt umfasst dann wenigstens zwei gegeneinander abgewinkelte Schenkel. Während die sich zumindest teilweise überdeckenden ersten Schenkel der Abschirmelemente eine geschlossene Abschirmfläche ausbilden, sind die Deckflächen deren jeweils zweiten Schenkel einander zugewandt. Die Längenänderbarkeit der Schutzabdeckung basiert dabei auf den zumindest begrenzt variierbaren Abständen zwischen den zweiten Schenkeln. Um die zur Beibehaltung der Abschirmfläche nötige Überdeckung der ersten Schenkel sowie den Zusammenhalt der Schutzabdeckung insgesamt zu gewährleisten, sind deren einzelne Abschirmelemente untereinander verkettet. Dies kann durch eine bewegliche Kopplung der sich jeweils unmittelbar gegenüberliegenden zweiten Schenkel über spezielle Verbinder erfolgen. Bei diesen Verbindern kann es sich um Federelemente handeln, deren Federwiderstand entweder in oder gegen die Richtung der möglichen Annäherung der zweiten Schenkel gerichtet ist. Im Ergebnis wird so entweder die Längung oder die Verkürzung der durch die ersten Schenkel gebildeten Abschirmfläche über die Verbinder zumindest unterstützt. Gleichzeitig können zumindest einige dieser Verbinder dazu ausgebildet sein, die Entfernung zweier unmittelbar benachbarter zweiter Schenkel der Abschirmelemente zu begrenzen, so dass die Abschirmfläche auch in der maximal möglichen Auszugslänge der Schutzabdeckung stets in sich geschlossen bleibt.

Um eine möglichst kompakte Verkürzung der Schutzabdeckung zu erhalten, müssen deren Verbinder entsprechende Anforderungen erfüllen. Diese sollten hierzu eine größtmögliche Annäherung der über sie verbundenen zweiten Schenkel der Abschirmelemente ermöglichen.

Da die Verbinder in der Regel zwischen den zweiten Schenkeln der Abschirmelemente angeordnet sind, ist daher deren möglichst flach bauende Ausgestaltung gewünscht.

Beispielsweise der DE 202 20 812 U1 ist bereits eine faltenbalglose Schutzabdeckung mit L-förmigen Abschirmelementen zu entnehmen. Die einzelnen Abschirmelemente sind als Blechlamellen ausgeführt, deren mit ihren Deckflächen gegenüberliegenden zweiten Schenkel durch federnde Verbinder miteinander verbunden sind. Jeder dieser Verbinder setzt sich aus zwei Blattfeder-Verbindungselementen zusammen, die über ihre Endbereiche aneinander befestigt sind. Jedes dieser identisch ausgebildeten und sich in Längsrichtung der Abschirmelemente erstreckenden Blattfeder-Verbindungselemente ist so ausgestaltet, dass deren sich jeweils zwischen ihren Endbereichen erstreckenden Abschnitte voneinander beabstandet sind. Hierdurch lässt sich jeder aus zwei miteinander verbundenen Blattfeder-Verbindungselementen bestehende und insofern zweiteilige Verbinder gegen seine Rückstellkraft elastisch zusammendrücken, wobei der Abstand zwischen seinen beiden Blattfeder-Verbindungselementen das hierfür zur Verfügung stehende maximale Maß definiert. Die beiden im entspannten Zustand voneinander beabstandeten Abschnitte jedes dieser Verbinder dienen der Befestigung der einzelnen Abschirmelemente, welche hierfür jeweils über ihren zweiten Schenkel beispielsweise durch Nieten an eines der beiden Blattfeder-Verbindungsele-mente eines Verbinders fest angebunden sind.

Die EP 1 980 361 A1 offenbart eine Schutzabdeckung mit zwei Varianten der die Abschirmelemente miteinander verkettenden Verbinder, von denen eine der aus der DE 202 20 812 U1 bekannten Ausführungsform entspricht. Die andere Variante zeigt Verbinder, deren beide Blattfeder-Verbindungselemente materialeinheitlich einstückig ausgebildet sind und eine ebenfalls materialeinheitlich einstückig an diese angebundene Stabilisierungsblattfeder aufweisen. Die einen V-förmigen Querschnitt aufweisende Stabilisierungsblattfeder ist quer zur Längsrichtung der Abschirmelemente in sich elastisch faltbar, um den Bewegungen der Blattfeder-Verbindungselemente folgen zu können. Die Stabilisierungsblattfedern wirken der sonst zumindest begrenzt möglichen relativen Verlagerung der Abschirmelemente in deren Längsrichtung entgegen, woraus sich ein präziseres Verhalten der Schutzabdeckung während ihrer Längenänderung ergibt.

Aus der DE 20 2004 018 318 U1 geht eine weitere Ausgestaltung einer Schutzabdeckung hervor, deren die Abschirmelemente aneinander kettenden Verbinder eine im Wesentlichen ähnliche Form und Ausrichtung wie die aus der DE 202 20 812 U1 vorbekannten Ausführungen aufweisen. Im Unterschied zu den dort einstückig ausgebildeten Blattfeder-Verbindungselementen jedes Verbinders sind diese hierbei jeweils in zwei Federbügel aufgetrennt, deren einander zugewandten freien Enden über ein Koppelelement miteinander gekoppelt sind. Jedes dieser Koppelelemente weist eine Ausnehmung auf, in der zwei mit jeweils einem freien Ende eines solchen Federbügels verbundene Ringscheiben verschieblich geführt sind. Im Ergebnis wird so eine relative Beweglichkeit der beiden an jeweils dem ersten Schenkel eines Abschirmelements der Schutzabdeckung befestigten Federbügel eines Verbinders erreicht.

Die EP 1 871 568 B1 sowie WO 2007/031112 A1 zeigen jeweils eine Schutzabdeckung, deren Abschirmelemente ebenfalls über Verbinder miteinander verkettet sind. Jeder dieser als blattfederartiges Kopplungselement ausgestalteten Verbinder ist aus zwei im Querschnitt jeweils Z-förmigen Federelementen zusammengesetzt. Hierdurch weist jedes dieser Federelemente zwei voneinander beabstandete Arme und einen die beiden Arme miteinander verbindenden Steg auf. Die Rückstellkraft jedes dieser Federelemente ergibt sich aus dessen einstückiger Ausgestaltung. Jeweils zwei dieser Federelemente sind zu einem Verbinder zusammengesetzt, indem einer der beiden Arme eines Federelements mit einem der beiden Arme eines anderen Federelements fest verbunden ist. Dabei sind die beiden Federelemente jedes Verbinders so zueinander ausgerichtet, dass deren freien Arme voneinander beabstandet sind, während deren Stege eine V-Form zwischen sich einschließen. Die Anbindung der Verbinder an die Abschirmelemente erfolgt über eine Festlegung ihrer freien Arme an die mit ihren Deckflächen einander zugewandten zweiten Schenkel der Abschirmelemente. Da die Stege der Verbinder sich quasi in Längsrichtung der Abschirmelemente erstrecken, ist eine quer zur Längenänderungsrichtung der Schutzabdeckung mögliche relative Verlagerbarkeit der einzelnen Abschirmelemente untereinander gegeben. Um diese Bewegungsmöglichkeit zu kompensieren, umfasst die Schutzabdeckung zusätzlich einzelne Stabilisierungs-Verbinder, deren Orientierung eine gegenüber den übrigen Verbindern um 90° gedrehte Ausrichtung aufweist. Die Stabilisierungs-Verbinder weisen ebenfalls jeweils zwei eine V-Form zwischen sich einschließende Stege mit an deren freien Enden angeordneten Armen auf. Im Unterschied zu den anderen Verbindern sind die Stabilisierungs-Verbinder einstückig ausgebildet, wobei zwischen den Übergängen der Stege jedes Stabilisierungs-Verbinders untereinander und hin zu den Armen einzelne Aussparungen angeordnet sind. Die jeweils eine Biegelinie definierenden Aussparungen dienen dem gezielten Biegeverhalten der Stabilisierungs-Verbinder.

Weiterhin ist die DE 20 2006 006 412 U1 auf ein Koppelelement im Sinne eines Verbinders sowie eine damit ausgestattete Schutzabdeckung gerichtet. Jeder dieser Verbinder ist durch einen einstückigen Grundkörper aus Kunststoff gebildet. Deren jeweiliger Grundkörper besitzt eine Trapezform, welche zwei parallel zueinander beabstandete lange Federschenkel und zwei diese endseitig miteinander verbindende kurze Basisstege aufweist. An einem ersten Basissteg sind zwei Rastnasen sowie zwei voneinander weg weisende Haltefortsätze angeordnet, während der zweite Basissteg eine Halteplatte mit einer daran angeordneten Gleitführungsnase besitzt. Die Abschirmelemente der Schutzabdeckung sind so gestaltet, dass der Grundkörper eines Verbinders über seinen ersten Basissteg und dessen Rastnasen sowie Haltefortsätze mit korrespondierenden Ausnehmungen eines Abschirmelements ortsfest koppelbar ist. Der zweite Basissteg ist mit einem ein Langloch aufweisenden Bereich eines benachbarten Abschirmelements entsprechend linear verschieblich koppelbar, indem dessen Halteplatte das Abschirmelement zumindest teilweise umgreift, während dessen Gleitführungsnase innerhalb des Langlochs angeordnet ist.

Mit der DE 10 2011 113 374 A1 wurde eine Schutzabdeckung bekannt, deren ihre Abschirmelemente miteinander verkettenden Verbinder einstückig ausgebildet sind. Jeder dieser Verbinder weist zwei eine V-Form zwischen sich einschließende Schenkel auf, deren jeweiliges Ende unter Ausbildung eines Armes gegenüber dem zugehörigen Schenkel abgewinkelt ist. Die zu einer Seite des jeweiligen Verbinders weisenden Arme weisen in Richtung seiner V-Form.

Der WO 2012/175232 A1 sowie der EP 2 724 071 A1 ist jeweils eine Schutzabdeckung zu entnehmen, wobei deren ihre Abschirmelemente miteinander verkettenden Verbinder eine wie bereits aus der WO 2007/031112 A1 bekannte Zweiteilung aufweisen. Dabei sind deren zu Armen abgewinkelten Enden aber nicht in, sondern entgegen der Richtung der eine V-Form zwischen sich einschließenden Schenkel ausgerichtet. Überdies weisen die Verbinder ein deren Arme miteinander verbindendes Zugband auf, um den Öffnungswinkel zwischen den Schenkeln und damit die Auszugslänge der Schutzabdeckung zu begrenzen.

Auch die DE 10 2014 113 113 A1 ist auf eine Schutzabdeckung gerichtet, deren ihre Abschirmelemente verkettenden Verbinder jeweils einteilig ausgebildet sind. Die Verbinder weisen dabei jeweils einen im Wesentlichen Z-förmigen Querschnitt auf.

Die DE 10 2014 110 571 A1 zeigt eine Schutzabdeckung, deren Abschirmelemente über Verbinder aus Kunststoff miteinander verkettet sind. Jeder dieser Verbinder weist zwei über ein Filmscharnier miteinander gekoppelte Schenkel auf, deren an ihrem jeweiligen freien Ende ausgebildeten Konturen mit in den Abschirmelementen angeordneten Öffnungen korrespondieren.

Die Öffnungen sind so groß gestaltet, dass bei vollständig eingefahrener Schutzabdeckung die Schenkel der Verbinder bis in die jeweils zugehörige Öffnung hinein verschwenkt sind.

Aus der EP 3 663 038 A1 ist eine Schutzabdeckung bekannt, deren Abschirmelemente in jeweils einem ihrer L-förmig zuein-ander ausgerichteten Schenkeln eine Vielzahl an unter Ausbildung von paarweise nebeneinander angeordneten Laschen eingebrachte Ausstanzungen aufweisen. Die Laschen eines solchen Paares lassen sich in entgegengesetzten Richtungen aus der Ebene des zugehörigen Schenkels herausschwenken, wobei deren freie Enden eine Kontur besitzen, die mit in den benachbarten Abschirmelementen angeordneten Schlitzöffnungen in Eingriff bringbar sind. Die Laschen dienen als Verbinder, um die einzelnen Abschirmelemente miteinander zu verketten.

Die DE 20 2019 105 041 U1 sowie die DE 20 2019 105 044 U1 offenbaren jeweils eine Schutzabdeckung, der ein möglichst leichter Austausch der Abschirmelemente zugrunde liegt. Hierzu sind Befestigungsmittel an den Abschirmelementen vorgesehen, an denen die Verbinder im Sinne einer Klickverbindung lösbar festlegbar sind.

Um bei vollständig eingefahrener Schutzabdeckung möglichst kompakte Abmessungen zu erhalten, weisen die bisher bekannten Ausführungsformen mitunter aufwendige Ausgestaltungen und Bauformen auf. Großfläche Ausnehmungen zur teilweisen Aufnahme der Verbinder können dabei zu einer unerwünschten Schwächung der einzelnen Bauteile führen.

Der vorliegenden Erfindung liegt daher die Aufgabe zugrunde, eine gattungsgemäße Schutzabdeckung dahingehend weiterzuentwickeln, dass mit dieser ein möglichst kompaktes Zusammendrückmaß bei gleichzeitig verringertem Materialeinsatz für eine wirtschaftlichere Herstellungsweise erreichbar ist.

Diese Aufgabe wird durch eine Schutzabdeckung mit den Merkmalen von Schutzanspruch 1 gelöst. Vorteilhafte Ausgestaltungen sind Gegenstand der abhängigen Unteransprüche.

Erfindungsgemäß wird eine Schutzabdeckung vorgeschlagen, bei der wenigstens einige, bevorzugt jeder Verbinder einen Mittelsteg oder Verbindungssteg besitzt, welcher mit dem zweiten Schenkel eines Abschirmelements verbunden ist. Der Mittelsteg weist mindestens zwei zumindest indirekt an diesem schwenkbar angeordnete Arme auf. Dabei sind die Verbinder so zueinander angeordnet, dass wenigstens ein Arm eines einem Abschirmelement zugehörigen Verbinders mit dem Arm eines einem anderen, insbesondere unmittelbar benachbarten, Abschirmelement zugehörigen Verbinders verbunden ist. Während die so gestalteten Verbinder jeweils über ihren Mittelsteg mit dem zweiten Schenkel des zugehörigen Abschirmelements verbunden sind, dient somit jeweils mindestens einer ihrer Arme zur eigentlichen Verkettung der Verbinder und insofern der Abschirmelemente untereinander.

Der sich hieraus ergebende Vorteil liegt darin begründet, dass die zweiten Schenkel der Abschirmelemente eine nur geringe Breite benötigen, um eine ausreichend stabile Verbindung mit dem Mittelsteg des jeweiligen Verbinders zu gewährleisten.

Je nach Ausrichtung der Verbinder waren bisher relativ breite zweite Schenkel erforderlich, nur um insbesondere die parallel zur Längsrichtung der Abschirmelemente verlaufenden Arme eines Verbinders an diesen befestigen zu können. Dies liegt im Wesentlichen daran, dass die Arme wenigstens einiger der Verbinder in Bezug auf eine quer zur Längsrichtung eines Abschirmelements verlaufenden Querrichtung nebeneinander angeordnet sind und der vom ersten Schenkel am weitesten entfernte Arm eines Verbinders bei einem zu schmalen zweiten Schenkel ansonsten keinen Kontakt zu diesem erhalten und insofern quasi frei im Raum liegen würde.

Da die erfindungsgemäße Ausgestaltung die Befestigung der Verbinder an den Abschirmelementen nicht über die Arme der Verbinder, sondern über deren jeweiligen Mittelsteg vorsieht, können so auch die von der Abschirmfläche und damit von dem jeweiligen ersten Schenkel weit entfernten Arme zur Verkettung der Abschirmelemente dienen, da diese keinen direkten Kontakt zu dem jeweiligen zweiten Schenkel, sondern nur mit wenigstens einem Arm eines benachbarten Verbinders benötigen. Damit kann der zweite Schenkel jedes Abschirmelements deutlich schmaler als der zugehörige erste Schenkel gestaltet sein, was mit einer Einsparung an Material und insofern einer wirtschaftlicheren Herstellungsweise einhergeht. Besagte schmalere Ausgestaltung meint im Rahmen der Erfindung das Verhältnis der sich jeweils quer zur Längsrichtung eines Abschirmelements erstreckenden Breiten seiner beiden Schenkel. Zudem lässt sich hierdurch auch das Gewicht einer solchen Schutzabdeckung entsprechend reduzieren, so dass sie für dynamischere Anwendung eingesetzt werden kann.

Der zweite Schenkel eines Abschirmelements kann beispielsweise so gestaltet sein, dass dieser nur in den Abschnitten einen zweiten Schenkel aufweist, in denen jeweils ein Verbinder über seinen Mittelsteg festzulegen ist. Alternativ oder ergänzend kann der zwischen zwei mit demselben Abschirmelement verbundenen Verbindern gelegene Teil des zweiten Schenkels schmaler als der im Bereich der Verbinder gelegene Teil des zweiten Schenkels sein. Der dann als Mittelteil zu bezeichnende schmalste Teil des zweiten Schenkels hat dann beispielsweise nur noch die Aufgabe, das Abschirmelement in Bezug auf eine auf die Abschirmfläche einwirkenden Belastung gegenüber Biegen um die schwache Achse seines ersten Schenkels herum auszusteifen.

Die erfindungsgemäße Schutzabdeckung kann bevorzugt für eine Maschine Verwendung finden, so dass sie auch als eine Maschinenschutzabdeckung bezeichnet werden kann.

Gemäß einer bevorzugten Weiterbildung des grundsätzlichen Erfindungsgedankens können wenigstens zwei der unterschiedlichen Abschirmelementen zugehörigen Verbinder jeweils wenigstens drei Arme aufweisen, die an dessen Mittelsteg schwenkbar angeordnet sind. Dabei kann der erste Arm eines Verbinders mit dem ersten Arm des anderen Verbinders verbunden sein, während der dritte Arm dieses Verbinders dann mit dem dritten Arm des anderen Verbinders verbunden ist. Alternativ oder ergänzend hierzu kann der zweite Arm eines Verbinders mit dem zweiten Arm des anderen Verbinders verbunden sein. In jedem Fall dienen die Arme zur Verkettung der Verbinder untereinander, während deren Befestigung an den Abschirmelementen über ihren jeweiligen Mittelsteg erfolgt.

Nach einer weiteren vorteilhaften Ausgestaltung können wenigstens zwei der unterschiedlichen Abschirmelementen zugehörigen Verbinder jeweils vier an ihrem Mittelsteg schwenkbar angeordnete Arme aufweisen. Dabei kann dann der erste Arm eines Verbinders mit dem ersten Arm des anderen Verbinders verbunden sein, während der dritte Arm dieses Verbinders mit dem dritten Arm des anderen Verbinders verbunden ist. Alternativ oder ergänzend hierzu kann der zweite Arm eines Verbinders mit dem zweiten Arm des anderen Verbinders verbunden sein, während der vierte Arm dieses Verbinders dann mit dem vierten Arm des anderen Verbinders verbunden ist. In jedem Fall dienen die Arme zur Verkettung der Verbinder untereinander, während deren Befestigung an den Abschirmelementen über ihren jeweiligen Mittelsteg erfolgt.

Gemäß einer weiteren vorteilhaften Ausgestaltung können wenigstens zwei der unterschiedlichen Abschirmelementen zugehörigen Verbinder jeweils wenigstens fünf an ihrem jeweiligen Mittelsteg schwenkbar angeordnete Arme aufweisen. Dabei können dann entweder zwei unmittelbar benachbarte Arme ein und desselben Verbinders jeweils mit einem von zwei unmittelbar benachbarten Armen des anderen Verbinders verbunden sein. Alternativ oder ergänzend können zwei wenigstens einen Arm zwischen sich einschließende Arme desselben Verbinders jeweils mit einem von zwei wenigstens einen Arm zwischen sich einschließende Arme des anderen Verbinders verbunden sein. In jedem Fall dienen die Arme zur Verkettung der Verbinder untereinander, während deren Befestigung an den Abschirmelementen über ihren jeweiligen Mittelsteg erfolgt.

Mit Blick auf die Arme der Verbinder wird es als besonders vorteilhaft angesehen, wenn diese an dem jeweiligen Mittelsteg des Verbinders nebeneinander angeordnet sind. Dies ermöglicht, dass die Arme bei zunehmender Annäherung der zweiten Schenkel der mit ihnen verbundenen Abschirmelemente nicht aufeinander zum Liegen kommen, sondern in einer gemeinsamen Ebene nebeneinander anordenbar sind. Hieraus ergibt sich eine überaus flach bauende Ausgestaltung für die einzelnen Verbinder, woraus sich rein baulich ein entsprechend kleines Zusammendrückmaß für die gesamte Schutzabdeckung ergibt.

Die Erfindung sieht vor, dass die Arme wenigstens eines Verbinders im Bereich seines Mittelstegs angeordnet sein können. Bevorzugt können die Arme dabei an derselben Kante des Mittelstegs angeordnet sein. Dies meint in jedem Fall, dass die Arme dieses Verbinders nur zu einer Seite seines Mittelstegs hin gelegen sind. Dies ist besonders dann vorteilhaft, wenn die Arme des so gestalteten Verbinders sich schräg, insbesondere quer zur Längsrichtung des zugehörigen Abschirmelements erstrecken.

Nach einer bevorzugten Weiterentwicklung kann mindestens ein Arm wenigstens eines Verbinders im Bereich einer Kante seines Mittelstegs angeordnet sein. Bevorzugt kann der Arm dabei an einer Kante des Mittelstegs angeordnet sein. Demgegenüber ist dann zumindest ein anderer Arm desselben Verbinders im Bereich, bevorzugt an einer dieser Kante abgewandten Kante des Mittelstegs angeordnet. Auf diese Weise sind wenigstens zwei der Arme des Verbinders an unterschiedlichen Seiten seines Mittelstegs gelegen. Dies ist besonders dann vorteilhaft, wenn die Arme des so gestalteten Verbinders sich im Wesentlichen parallel zur Längsrichtung des zugehörigen Abschirmelements erstrecken.

Besonders bevorzugt können wenigstens zwei Arme desselben Verbinders zueinander unterschiedlich orientiert sein. Dies meint eine voneinander abweichende Orientierung der Arme derart, dass diese jeweils in einer von zwei einen Winkel zwischen sich einschließenden Ebenen schwenkbar sind. Bei dem Winkel kann es sich bevorzugt um einen rechten Winkel handeln. Auf diese Weise lassen sich beispielsweise mindestens zwei einzelne, mit unterschiedlich zueinander orientierten Armen ausgestattete Verbinder zu einem gemeinsamen Verbinder kombinieren. Neben der so einfacheren Montage eines "größeren" Verbinders anstatt wenigstens zwei einzelner Verbinder kann dieser dann auch einfacher gefertigt sein, beispielsweise materialeinheitlich einstückig.

Nach einer besonders bevorzugten Weiterbildung der erfindungsgemäßen Schutzabdeckung kann der Mittelsteg wenigstens eines ihrer Verbinder einen sich von diesem weg erstreckenden Ausleger aufweisen. Der insofern vorspringende Ausleger kann dabei in vorteilhafter Weise in Ebene des Mittelstegs verlaufen. Wenigstens einer der Arme ist dann im Bereich, bevorzugt an einer Kante dieses Auslegers angeordnet. Durch den wenigstens einen Ausleger ist es möglich, einen daran angeordneten Arm weiter von der Abschirmfläche weg zu positionieren, ohne dass es hierfür eine sonst notwendige Verbreiterung des zweiten Schenkels des zugehörigen Abschirmelements braucht. Zudem lässt der wenigstens eine Ausleger diverse Ausrichtungen eines daran angeordneten Arms in Bezug auf dessen Schwenkebene zu.

Grundsätzlich ist vorgesehen, dass die Arme der Verbinder freie Endabschnitte aufweisen, von denen wenigstens einer schwenkbar gegenüber dem zugehörigen Arm ausgestaltet ist. In jedem Fall können so die unmittelbar miteinander in Kontakt stehenden Arme zweier Verbinder über ihre freien Endabschnitte miteinander verbunden sein.

Wenigstens einer der Verbinder kann mindestens eine Biegelinie aufweisen, entlang der zumindest ein Teil dieses Verbinders gegenüber einem anderen Teil desselben Verbinders schwenkbar ist. Dabei kann die Biegelinie oder mindestens eine der Biegelinien durch ein Filmscharnier gebildet sein, welches lückenlos ausgestaltet sein kann.

Besonders bevorzugt kann die Biegelinie durch eine in das Material des zugehörigen Verbinders hinein gerichtete Prägung ausgebildet sein. Dies meint, dass die jeweilige Biegelinie oder das jeweilige Filmscharnier ohne etwaigen Materialabtrag ausgebildet ist, wobei die erforderliche Reduzierung des Querschnitts auf einer Materialverdrängung oder/und Materialkomprimierung des Verbinders basiert.

Unter Prägen wird im Rahmen der Erfindung sowohl eine zur jeweiligen Oberfläche senkrecht verlaufende lineare oder/ und parallel zur Oberfläche verlaufende rollende Bewegung des hierfür notwendigen Werkzeugs verstanden. Hierdurch wird eine Vertiefungslinie im Sinne einer Nut erzeugt, deren Materialverdrängung bevorzugt aus einem kalten, also ohne einen mit Aufschmelzen und/oder Abfräsen einhergehenden Pressvorgang heraus resultieren kann. Bevorzugt kann die Prägung dabei ohne etwaiges lokales Durchstanzen oder/ und Schlitzen ausgebildet sein, so dass sich ein jeweils lückenloses Filmscharnier ergibt.

Dabei kann die verbliebene Materialstärke im Bereich der Biegelinie oder des Filmscharniers bevorzugt gleichbleibend sein.

Gegenüber den sonst bei flächigen Materialien (wie beispielsweise Folien oder Platten) durch Materialabtrag oder/ und Materialverlust, wie beispielsweise mittels Fräsen oder/und Stanzen erzeugten Biegelinien ermöglicht die durch Prägen erzeugte Biegelinie oder das auf diese Weise ausgebildete Filmscharnier eine verbesserte Biegung des Materials, was im Ergebnis zu einem deutlich kompakteren Zusammendrückmaß der Schutzabdeckung führt. Beispielsweise benötigen durch eine perforierte Loch- oder Schlitzreihe erzeugte Biegelinien beim Knicken größere Biegeradien, was zu einem nicht vollständig möglichen Aufeinanderlegen der gegeneinander schwenkbaren Teile eines Verbinders führt. Überdies kann eine geprägte Biegelinie ein überaus haltbares und besonders einfach herstellbares Filmscharnier erzeugen, bevorzugt bei einem aus Kunststoff gebildeten Verbinder.

Im Rahmen der Erfindung wird es als vorteilhaft angesehen, wenn der Mittelsteg wenigstens eines Verbinders der Schutzabdeckung über wenigstens ein Befestigungsmittel am zweiten Schenkel des ihm zugehörigen Abschirmelements festgelegt ist.

Bei diesem Befestigungsmittel kann es sich um ein lösbares oder ein unlösbares Befestigungsmittel oder eine Kombination daraus handeln.

Alternativ oder ergänzend hierzu wird es als vorteilhaft angesehen, wenn die miteinander in Kontakt stehenden Arme zweier Verbinder über wenigstens ein Befestigungsmittel miteinander verbunden sind. Bei diesem Befestigungsmittel kann es sich um ein lösbares oder ein unlösbares Befestigungsmittel oder eine Kombination daraus handeln.

Wenigstens eines der vorgenannten Befestigungsmittel kann durch mindestens eine der nachfolgenden Ausführungsformen gebildet sein oder eine solche enthalten:
- Niete,
- Schraube,
- Bolzen,
- Rastelement,
- Klammer,
- Klebstoff,
- Schweißen.

Mit anderen Worten kann es sich bei einem solchen Befestigungsmittel um eine stoffschlüssige Verbindung oder ein zusätzliches Bauteil oder eine Kombination hieraus handeln, um die jeweils notwendige Verbindung zu realisieren.

In vorteilhafter Weise kann wenigstens einer, bevorzugt jeder der Verbinder aus einem plattenförmigen Grundkörper gebildet sein. Der Grundkörper kann dann unter Ausbildung der Arme durch Materialausschnitte in einzelne Bereiche aufgetrennt sein. Die Materialausschnitte können zumindest teilweise bis an den Rand des jeweiligen Grundkörpers der einzelnen Verbinder reichen, so dass diese zum Rand hin offen sind und so ein vollständiges "Freischneiden" des jeweiligen Bereichs bewirken.

Bevorzugt kann der freie Endabschnitt wenigstens eines Arms mindestens eines Verbinders im Sinne eines Fußabschnitts über ein Filmscharnier gegenüber dem zugehörigen Arm schwenkbar gestaltet sein. Durch die Anordnung oder Ausbildung eines solchen Filmscharniers ergibt sich ein kontrolliertes Verhalten für den Arm des so ausgestalteten Verbinders während der möglichen Längenänderung der Schutzabdeckung. Je nach deren Ausgestaltung kann dies einen - im Vergleich zu einer Biegelinie - geringeren oder entsprechend höheren Widerstand gegenüber Schwenkbewegungen aufweisen, um beispielsweise das Bewegungsverhalten mindestens zweier Abschirmelemente untereinander einzustellen.

Im Rahmen der Erfindung wird es als vorteilhaft angesehen, wenn wenigstens der zweite Schenkel mindestens eines Abschirmelements eine oder mehrere Öffnungen besitzt. Die Öffnung kann beispielsweise kreisrund ausgestaltet sein. Diese kann etwa durch einfaches Stanzen oder/und Bohren in dem Abschirmelement angeordnet sein. Der Mittelsteg mindestens eines Verbinders kann dann über zumindest ein sich wenigstens teilweise durch diese Öffnung hindurch erstreckendes Befestigungsmittel mit diesem Abschirmelement verbunden sein.

Mit Blick auf eine möglichst wirtschaftliche Herstellungsweise können die einzelnen Verbinder grundsätzlich baugleich ausgestaltet sein. Diese ermöglicht deren Serienfertigung mit entsprechend niedrigen Stückkosten. Demgegenüber bevorzugt können wenigstens zwei voneinander unterschiedliche Bauarten von Verbindern zum Einsatz kommen. So kann zwischen zwei unmittelbar zueinander benachbarte Abschirmelemente miteinander verkettenden baugleichen Verbindern ein von deren Bauart abweichender Verbinder angeordnet sein. Die in ihrer Bauart voneinander abweichenden Verbinder können dann unterschiedliche Aufgaben erfüllen. So kann die eine Bauart im Wesentlichen nur zur Verkettung der Abschirmelemente dienen, während die andere Bauart eine relative Verlagerung der Abschirmelemente untereinander in Bezug auf deren Längsrichtung verhindert. Durch die hierzu in der Regel andere Orientierung dieses Verbinders kann dieser in seiner Bauart entsprechend angepasst sein, so dass sich dessen struktureller Unterschied zu der Bauart der anderen Verbinder ergibt.

Mit Bezug auf die Schwenkbarkeit der jeweiligen Arme können beispielsweise die Arme des einen von den beiden anderen Verbindern abweichende Bauart aufweisenden Verbinders eine gegenüber deren Arme andere, insbesondere um 90° gedrehte Orientierung aufweisen.

Grundsätzlich sieht die Erfindung vor, dass die Abschirmelemente der Schutzabdeckung aus einem Metall gebildet sein können. Alternativ oder ergänzend hierzu können die Verbinder aus einem der nachfolgend genannten Kunststoffe gebildet sein oder einen solchen aufweisen:
- Polyamid,
- Polypropylen,
- Polypropylen-Copolymer
- Polyethylen.

Insbesondere durch eine entsprechende Wahl des Kunststoffes für die Verbinder lässt sich deren Haltbarkeit gegenüber einer Ausführung aus Metall mitunter deutlich erhöhen.

Zudem kann die Hysterese des Kunststoffes eine wirksame Dämpfung des aus den Verbindern gebildeten Federsystems bewirken, was sich in der praktischen Anwendung vorteilhaft auf das Laufverhalten der Schutzabdeckung auswirken kann.

Die erfindungsgemäße Schutzabdeckung ermöglicht ein überaus kompaktes Zusammendrückmaß bei gleichzeitig verringertem Gewicht und wirtschaftlicher Herstellungsweise. Insbesondere die Verkettung der einzelnen Verbinder über deren Arme ermöglicht es, deren jeweiligen Mittelsteg zur Verbindung mit dem zugehörigen Abschirmelement zu nutzen. Auf diese Weise ist es möglich, den zur Festlegung der Verbinder vorgesehenen zweiten Schenkel der Abschirmelemente entsprechend schmal zu gestalten. Aufgrund der vorbeschriebenen Ausgestaltungen lässt sich ein Zusammendrückmaß für die Schutzabdeckung erreichen, welches beispielsweise unter der Summe der Materialdicken der zweiten Schenkel der einzelnen Abschirmelemente zuzüglich der 2,5-fachen Menge der Materialdicke der einzelnen Verbinder liegen kann. Die Materialdicke der Grundkörper der Verbinder kann beispielsweise 1,0 mm ± 0,5 mm betragen. Zusätzlich oder alternativ zur Verwendung von Verbindungsmitteln in Form von zusätzlichen Bauteilen, wie etwa Schrauben oder/und Nieten können die einzelnen Verbinder auch durch die Öffnungen in den ersten Schenkeln der Abschirmelemente hindurch stoffschlüssig miteinander verbunden sein. Dies kann beispielsweise durch Schweißen oder/und Kleben erfolgen, wobei diese Verbindungsformen als Verbindungsmittel im Sinne der Erfindung gelten. Denkbar ist auch eine Festlegung der Verbinder durch angeschweißte Blechscheiben, die dann ebenfalls als Verbindungsmittel im Sinne der Erfindung gelten.

Nach einer alternativen Ausgestaltung können die Arme der Verbinder freie Endabschnitte aufweisen, wobei wenigstens einer der Arme eines Verbinders über seinen freien Endabschnitt mit dem Mittelsteg eines, insbesondere unmittelbar, benachbarten Verbinders verbunden ist. Bevorzugt sind die freien Endabschnitte dabei schwenkbar ausgestaltet.

Die Erfindung sieht vor, dass wenigstens einer der Arme eines Verbinders zwei gegeneinander schwenkbare Armabschnitte besitzt. Dabei ist dieser Arm über seinen ersten Armabschnitt mit dem Mittelsteg verbunden, während der freie Endabschnitt an seinem zweite Armabschnitt angeordnet ist.

Wenigstens einer der Verbinder kann aus einem plattenförmigen Grundkörper gebildet sein, wobei der Grundkörper dann mindestens eine Biegelinie aufweist. Die Biegelinie ist dazu vorgesehen und ausgebildet, dass entlang dieser zumindest ein Teil des Verbinders gegenüber einem anderen Teil desselben Verbinders schwenkbar ist.

Wenigstens eine der Biegelinien kann durch ein Filmscharnier gebildet sein. Bevorzugt ist dieses Filmscharnier lückenlos ausgebildet.

Alternativ oder ergänzend hierzu kann sich wenigstens eine der Biegelinien entlang eines zumindest teilweisen Materialabtrags des Grundkörpers erstrecken. Weiterhin alternativ oder ergänzend hierzu kann sich eine Biegelinie entlang einer Aneinanderreihung von sich durch den Grundkörper hindurch erstreckenden Durchgangsöffnungen erstrecken

Bevorzugt kann wenigstens einer der Verbinder so in Bezug auf seinen Grundkörper mehrfach gefaltet sein, dass dieser zumindest in seinem gestreckten und gestauchten Zustand eine Rautenform zwischen sich einschließt.

Bevorzugt können der Mittelsteg und wenigstens ein freier Endabschnitt zweier unmittelbar zueinander benachbarter Verbinder jeweils zumindest eine, insbesondere kreisrunde, Öffnung besitzen. Dabei wird es als vorteilhaft angesehen, wenn der Mittelsteg des einen Verbinders und der freie Endabschnitt des anderen Verbinders unter Zwischenschaltung des zweiten Schenkels eines zugehörigen Abschirmelements durch mindestens ein sich zumindest teilweise durch deren Öffnungen hindurch erstreckendes Befestigungsmittel verbunden sind.

Es ist vorgesehen, dass zwei unmittelbar benachbarte Verbinder einer Reihe einen baugleichen Grundkörper aufweisen können, wobei die Arme des einen Verbinders genenüber den Armen des anderen Verbinders in voneinander unterschiedliche Richtungen gegenüber dem jeweiligen Mittelsteg verschwenkt sind.

Ergänzend hierzu können die beiden unmittelbar benachbarten Verbinder in Bezug auf die Hochrichtung der Schutzabdeckung um 180° zueinander rotiert eingebaut sein.

Bevorzugt können die freien Endabschnitte wenigstens eines Verbinders einander zugewandt sein. Dabei können sich auch zumindest teiwleise einen Kontakt zueinander aufweisen.

Grundsätzlich kann der Wert einer Höhe wenigstens eines Teils mindestens eines Verbinders dem 2-fachen bis 4-fachen Wert einer Breite des zweiten Schenkels des mit diesem Verbinder verbundenen Abschirmelements entsprechen. Alternativ kann besagtes Verhältnis auch dem 2,5-fachen bis 3,5-fachen Wert, insbesondere dem 3-fachen Wert, entsprechen. In jedem Fall weist wenigstens ein Teil eines solchen Verbinders eine sich, bevorzugt parallel zur Breite des damit verbundenen zweiten Schenkels des zugehörigen Abschirmelements erstreckende, Höhe auf, welche in Bezug auf deren Wert wenigstens doppelt so groß ist, wie der Wert der Breite des damit verbundenen zweiten Schenkels des zugehörigen Abschirmelements.

Mit Blick auf die sich jeweils quer zur Längsrichtung eines Abschirmelements erstreckenden Breiten seiner beiden Schenkel wird es als vorteilhaft angesehen, wenn bei mindestens einem Abschirmelement, bevorzugt bei allen Abschirmelementen, die Breite des zweiten Schenkels von 15% bis 25%, bevorzugt von 18% bis 22%, insbesondere 20%, der Breite des zugehörigen ersten Schenkels s (2-7) entspricht.

Weitere Ausgestaltungen der Erfindung ergeben sich im Zusammenhang mit einigen schematisch dargestellten und nachfolgend näher beschriebenen Ausführungsbeispielen der Erfindung. Es zeigen:
- Figur 1: eine erfindungsgemäße Schutzabdeckung in einer perspektivischen Darstellungsweise,
- Figur 2: einen einzelnen Verbinder der Schutzabdeckung aus Fig. 1 in perspektivischer Darstellungsweise,
- Figur 3: einen einzelnen Verbinder der Schutzabdeckung aus Fig. 1 in einer Variante zu dem in Fig. 2 gezeigten Verbinder in ebenfalls perspektivischer Darstellungsweise,
- Figur 4: eine alternative Ausführungsform der Schutzabdeckung aus Fig. 1 in einer dieser gegenüber veränderten perspektivischen Darstellungsweise,
- Figur 5: einen einzelnen Verbinder der Schutzabdeckung aus Fig. 4 in perspektivischer Darstellungsweise,
- Figur 6: eine weitere zu den in Fig. 1 und Fig. 4 ersichtlichen Schutzabdeckungen alternative Ausführungsform in einer ebenfalls perspektivischen Darstellungsweise
- Figur 7: den Grundkörper einer alternativen Ausgestaltung eines Verbinders in perspektivischer Ansicht,
- Figur 8: den Verbinder aus Fig. 7 in einem für den Einbau gefalteten Zustand seines Grundkörpers,
- Figur 9: die Anordnung mehrerer Verbinder aus Fig. 8 innerhalb der Schutzabdeckung in einer Explosionsdarstellung sowie
- Figur 10: eine alternative Ausgestaltung der Schutzabdeckung mit den Verbindern aus Fig. 7 bis Fig. 9.

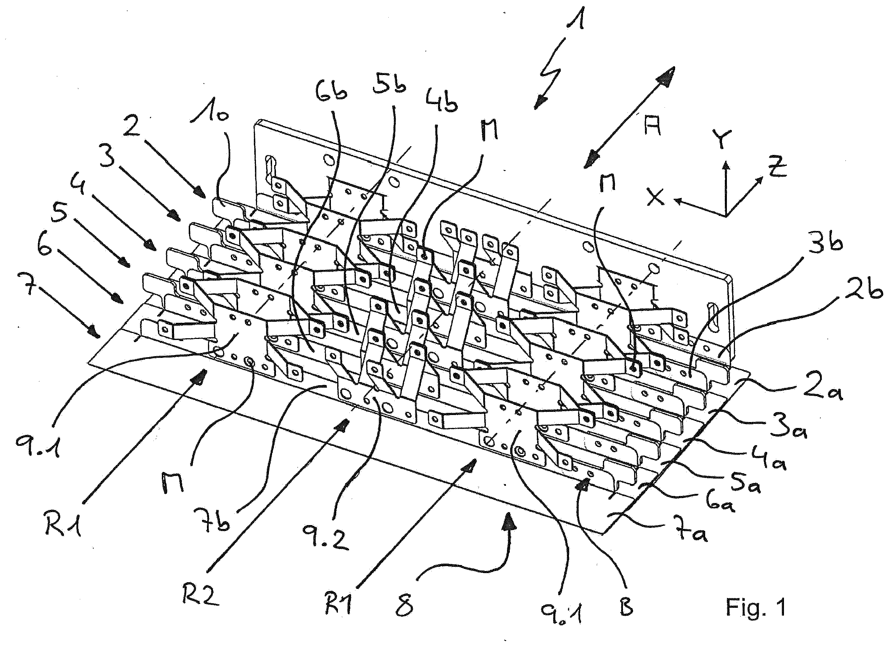

Fig. 1 zeigt eine erfindungsgemäße Schutzabdeckung 1 in einer perspektivischen Darstellungsweise.

Diese umfasst eine Vielzahl an sich parallel zu einer Längsrichtung X erstreckenden Abschirmelementen 2-7. Diese weisen jeweils zumindest abschnittsweise einen L-förmigen Querschnitt auf, so dass jedes dieser Abschirmelemente 2-7 einen ersten Schenkel 2a-7a und einen gegenüber dem ersten Schenkel 2a-7a abgewinkelten zweiten Schenkel 2b-7b besitzt. Dabei liegen die Deckflächen der zweiten Schenkel 2b-7b der Abschirmelemente 2-7 so einander gegenüber, dass sich deren ersten Schenkel 2a-7a zumindest teilweise unter Ausbildung einer in eine Längenänderungsrichtung A der Schutzabdeckung 1 längenveränderlichen Abschirmfläche 8 überdecken. Die Breite der zweiten Schenkel 2b-7b erstreckt sich dabei jeweils parallel zu einer Querrichtung Y, während sich die Breite der ersten Schenkel 2a-7a jeweils parallel zu einer Hochrichtung Z erstreckt.

An dem jeweils zweiten Schenkel 2b-7b jedes Abschirmelements 2-7 sind vorliegend rein beispielhaft jeweils drei Verbinder 9.1, 9.2 angeordnet. Von diesen sind weiterhin rein beispielhaft die hier jeweils außen gelegenen Verbinder 9.1 baugleich ausgeführt, während sich der jeweils zwischen diesen gelegene Verbinder 9.2 in seiner Bauart von diesen unterscheidet. Damit sind in dem hier gezeigten Ausführungsbeispiel mit Bezug auf die Hochrichtung Z beziehungsweise die Längenänderungsrichtung A jeweils übereinander gelegene Verbinder 9.1, 9.2 baugleich ausgeführt, so dass sich insgesamt drei Reihen R1, R2 mit jeweils baugleichen Verbindern 9.1, 9.2 ergeben. Weiterhin erkennbar ist, dass die in jeder Reihe R1, R2 jeweils in direktem Bezug miteinander stehenden Verbinder 9.1, 9.2 so wirken, als wären sie - mit Bezug auf die Querrichtung Y - um jeweils 180° verdreht zueinander eingebaut.

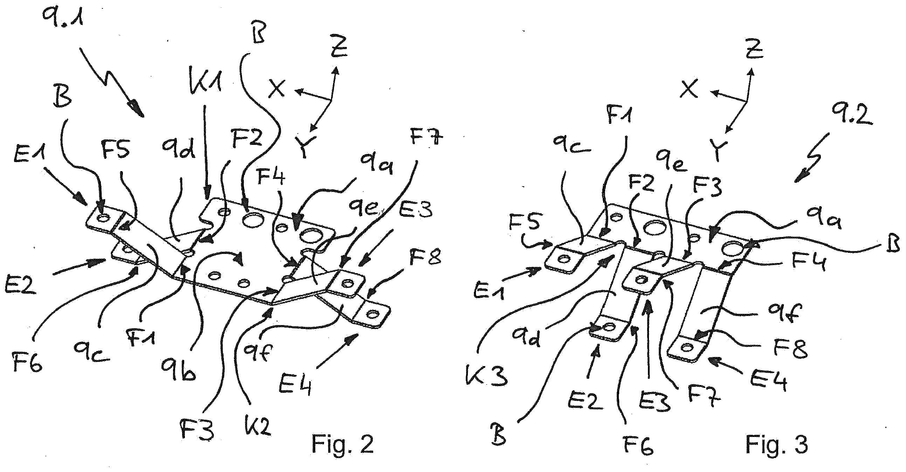

Fig. 2 ist ein einzelner der in den Reihen R1 verwendeten Verbinder 9.1 in einer von der restlichen Schutzabdeckung 1 isolierten perspektivischen Darstellungsweise zu entnehmen. Wie zu erkennen, handelt es sich hierbei um den in Fig. 1 rein beispielhaft in den beiden äußeren Reihen R1 eingesetzten Verbinder 9.1. Der Verbinder 9.1 weist einen Mittelsteg 9a auf, welcher vorliegend einen sich von diesem weg erstreckenden Ausleger 9b aufweist. Der nicht dem Ausleger 9b zugerechnete Teil des Mittelsteges 9a ist der Verbindungssteg, mit dem der Verbinder 9.1 mit dem zweiten Schenkel des Abschirmelements verbunden wird. Erkennbar erstreckt sich der Ausleger 9b dabei rein beispielhaft in Ebene des Mittelstegs 9a. Der hier gezeigte Verbinder 9.1 weist insgesamt vier Arme 9c-9f auf, welche indirekt an seinem Mittelsteg 9a angeordnet sind, wobei der Mittelsteg hier gleichzeitig den Verbindungssteg darstellt. Konkret sind zwei der Arme 9c, 9d gemeinsam an einer ersten Kante K1 des Auslegers 9b angeordnet, während die übrigen zwei Arme 9e, 9f an einer der ersten Kante K1 abgewandten zweiten Kante K2 des Auslegers 9b angeordnet sind.

Fig. 3 zeigt den zwischen den in Fig. 1 ersichtlichen Reihen R1 gelegenen Verbinder 9.2 der zweiten Reihe R2 in einer ebenfalls von der restlichen Schutzabdeckung 1 isolierten perspektivischen Darstellungsweise. Im Unterschied zu den in den äußeren Reihen R1 gelegenen Verbindern 9.1 weist dieser keinen Ausleger 9b auf, so dass dessen schwenkbaren Arme 9c-9f direkt an einer Kante K3 seines Mittelstegs 9a angeordnet sind. Dadurch erstrecken sich die einzelnen Arme 9c-9f in jeweils einer von hier vier parallel zueinander verlaufenden Ebenen. Ansonsten gilt das bereits zu den Verbindern 9.1 der beiden äußeren Reihen R1 Gesagte entsprechend.

Die Arme 9c-9f der Verbinder 9.1, 9.2 aus Fig. 2 und Fig. 3 sind in dem hier besprochenen Ausführungsbeispiel grundsätzlich jeweils schwenkbar ausgestaltet. Hierzu weisen die Arme 9c-9f jeweils zwei Biegelinien F1, F5; F2, F6; F3, F7; F4, F8 auf, wobei die jeweils im Bereich des Auslegers 9b (vgl. Fig. 2) beziehungsweise direkt am Mittelsteg 9b (vgl. Fig. 3) gelegene Biegelinie F1-F4 eines Arms 9c-9f als Filmscharnier ausgebildet sein kann. Weiterhin besitzt jeder der Arme 9c-9f einen freien Endabschnitt E1-E4, welcher ebenfalls über jeweils eine Biegelinie F5-F8 gegenüber dem zugehörigen Arm 9c-9f schwenkbar ist.

Mit Blick auf Fig. 1 wird deutlich, dass die direkt benachbarten Verbinder 9.1, 9.2 jeder Reihe R1, R2 miteinander verkettet sind. Hierzu sind jeweils zwei unmittelbar miteinander in Kontakt stehende Arme 9c-9f zweier baugleicher Verbinder 9.1, 9.2 pro Reihe R1, R2 über ihre freien Endabschnitte E1-E4 miteinander verbunden.

Konkret sind dabei die Verbinder 9.1 der hier äußeren Reihen R1 über die sich jeweils entlang einer parallel zur Längsrichtung X verlaufenden "gedachten" Linie voneinander weg erstreckenden Arme 9c, 9e; 9d, 9f mit den auf gleicher Höhe parallel zur Abschirmfläche 8 gelegenen Armen 9c, 9e; 9d, 9f des direkt benachbarten Verbinders 9.1 derselben Reihe R1 miteinander verbunden. Hierzu sind jeweils zwei auf gleicher Höhe liegende Arme 9c, 9e; 9d, 9f der unmittelbar benachbarten Verbinder 9.1 derselben Reihe R1 so zueinander verschwenkt, dass sie zumindest im gestreckten Zustand der Schutzabdeckung 1 eine veränderliche V-Form zwischen sich einschließen.

Damit ist der erste Arm 9c eines beispielsweise dem dritten Abschirmelement 4 zugehörigen Verbinders 9.1 mit dem ersten Arm 9c des unmittelbar benachbarten, beispielsweise dem zweiten Abschirmelement 3 zugehörigen anderen Verbinders 9.1 verbunden, während der dritte Arm 9e dieses dem zweiten Abschirmelement 3 zugehörigen Verbinders 9.1 mit dem dritten Arm 9e des anderen, dem dritten Abschirmelement 4 zugehörigen Verbinders 9.1 verbunden ist. Gleichzeitig ist dann der zweite Arm 9d des dem dritten Abschirmelement 4 zugehörigen Verbinders 9.1 mit dem zweiten Arm 9d des anderen, dem vierten Abschirmelement 5 zugehörigen Verbinders 9.1 verbunden, während der vierte Arm 9f dieses dem vierten Abschirmelement 5 zugehörigen Verbinders 9.1 mit dem vierten Arm 9f des anderen, dem dritten Abschirmelement 4 zugehörigen Verbinders 9.1 verbunden ist. Hierdurch wirkt es so, als wären die so mit-einander verketteten Verbinder 9.1 in Bezug auf die Querrichtung Y um jeweils 180° zueinander verdreht, was aber im Wesentlichen auf die unterschiedlichen Schwenkrichtungen ihrer Arme 9c-9f zurückzuführen ist.

Selbstverständlich können die Verbinder 9.1 und auch 9.2 abwechselnd um 180° verdreht (gewendet) montiert werden. Dadurch ergibt sich dann eine versetzte Positionierung der Befestigungselemente (z.B. Niete). Das heißt, die Befestigungselemente benachbarter Verbinder liegen dann jeweils nebeneinander und nicht aufeinander, was sich vorteilhaft auf das Zusammendruckmaß auswirkt.

Wie in Fig. 1 bereits ersichtlich, weisen die Arme 9c-9f der Verbinder 9.2 in der hier mittleren Reihe R2 eine um 90° gedrehte Orientierung gegenüber den Armen 9c-9f der Verbinder 9.1 in den beiden hier äußeren Reihen R1 auf.

Dabei sind immer zwei der sich jeweils in einer von vier parallel zur Hochrichtung Z verlaufenden "gedachten" Ebene erstreckenden Arme 9c-9f eines Verbinders 9.2 mit den in derselben Ebene liegenden Armen 9c-9f eines unmittelbar benachbarten Verbinders 9.2 verbunden. Hierzu sind jeweils zwei der in derselben Ebene liegenden Arme 9c-9f der unmittelbar benachbarten Verbinder 9.2 der mittleren zweiten Reihe R2 so zueinander verschwenkt, dass sie zumindest im gestreckten Zustand der Schutzabdeckung 1 eine veränderliche V-Form zwischen sich einschließen. Auf diese Weise ist der erste Arm 9c eines beispielsweise dem dritten Abschirmelement 4 zugehörigen Verbinders 9.2 mit dem ersten Arm 9c des unmittelbar benachbarten, beispielsweise dem zweiten Abschirmelement 3 zugehörigen anderen Verbinders 9.2 verbunden, während der dritte Arm 9e dieses dem zweiten Abschirmelement 3 zugehörigen Verbinders 9.2 mit dem dritten Arm 9e des anderen, dem dritten Abschirmelement 4 zugehörigen Verbinders 9.2 verbunden ist. Gleichzeitig ist dann der zweite Arm 9d des dem dritten Abschirmelement 4 zugehörigen Verbinders 9.2 mit dem zweiten Arm 9d des anderen, dem vierten Abschirmelement 5 zugehörigen Verbinders 9.2 verbunden, während der vierte Arm 9f dieses dem vierten Abschirmelement 5 zugehörigen Verbinders 9.2 mit dem vierten Arm 9f des anderen, dem dritten Abschirmelement 4 zugehörigen Verbinders 9.2 verbunden ist. Hierdurch wirkt es so, als wären die so miteinander verketteten Verbinder 9.2 in Bezug auf die Querrichtung Y um jeweils 180° zueinander verdreht, was aber im Wesentlichen auf die unterschiedlichen Schwenkrichtungen ihrer Arme 9c-9f zurückzuführen ist.

Selbstverständlich können die Verbinder 9.2 auch um 180° gedreht montiert werden, sofern deren Arme 9c-9f bereits aufgrund der Ausbildung der zum Schwenken notwendigen Biegelinien F1-F4 eine entsprechende Vorneigung aufweisen. In diesem Fall sind die miteinander verbundenen Verbinder 9.2 spiegelbildlich zu sehen, so dass die Bezugszeichen der Arme 9c-9f in der wie zuvor beschriebenen und in den Figuren verwendeten Weise beibehalten bleiben.

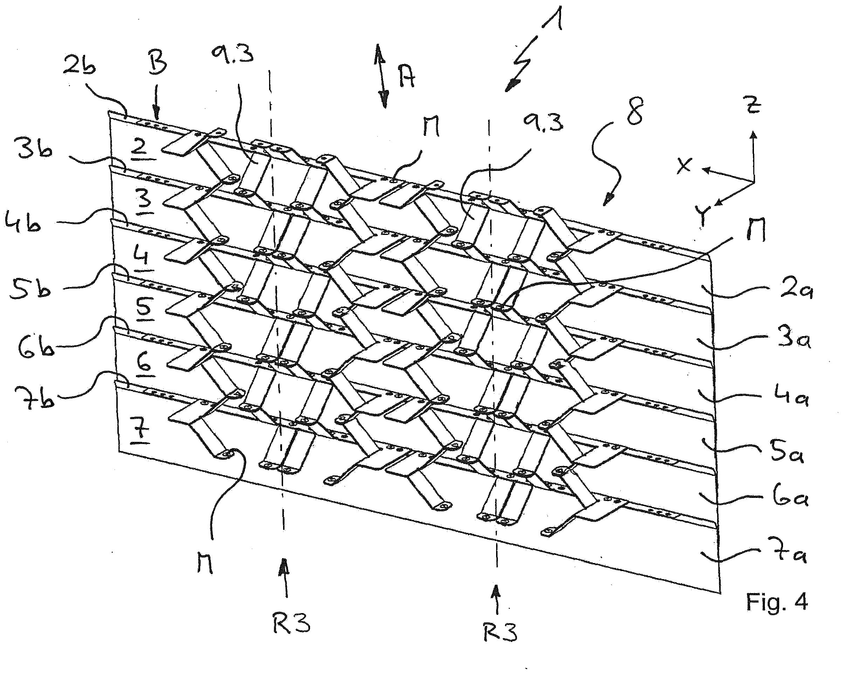

Fig. 4 ist eine alternative Ausgestaltungsform der Schutzabdeckung aus Fig. 1 zu entnehmen. Diese unterscheidet sich von der zuvor beschriebenen Ausführungsform nur in der Ausgestaltung ihrer Verbinder 9.3. Vorliegend sind die einzelnen Abschirmelemente 2-7 über baugleiche Verbinder 9.3 miteinander verkettet, welche in zwei zueinander parallelen Reihen R3 angeordnet sind.

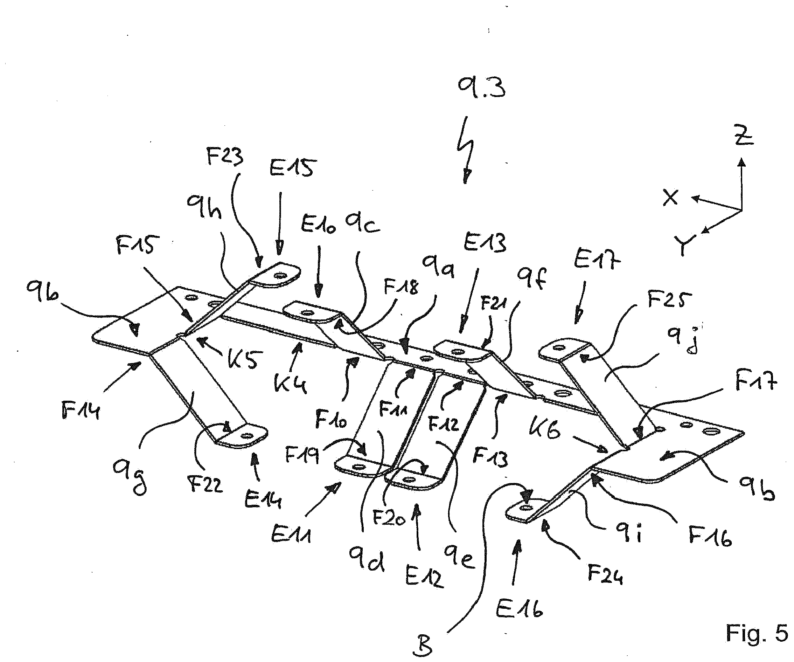

Fig. 5 verdeutlicht den Aufbau eines der in Fig. 4 ersichtlichen Verbinder 9.4. Erkennbar weist dieser einen gegenüber den vorherigen Verbindern 9.1-9.3 deutlich längeren Mittelsteg 9a auf, der gleichzeitig als Verbindungssteg zum zweiten Schenkel des Abschirmelements dient. An den beiden Endbereichen des Mittelstegs 9a ist jeweils ein Ausleger 9b angeordnet, die sich parallel zueinander in selber Richtung parallel zur Querrichtung Y erstrecken. Der hier gezeigte Verbinder 9.4 umfasst rein beispielhaft insgesamt acht Arme 9.1-9.8, von denen die zwischen den beiden Auslegern 9b gelegenen Arme 9c-9f an einer Kante K4 des Mittelstegs 9a angeordnet sind, während jeweils zwei der restlichen vier Arme 9g, 9h; 9i, 9j an einem der beiden Ausleger 9b an dessen jeweiligen Kante K5, K6 angeordnet sind. Die Kanten K5, K6 der beiden Ausleger 9b sind dabei einander zugewandt.

Wie zu erkennen, sind die am Mittelsteg 9a angeordneten mittleren Arme 9c-9f in gleicher Richtung parallel zur Erstreckung der beiden Ausleger 9b orientiert, während die an den Auslegern 9b gelegenen Arme 9g, 9h; 9i, 9j quer zu diesen orientiert sind. Damit schließen die Ebenen, in denen die mittleren Arme 9c-9f schwenkbar sind und die Ebenen, in denen die jeweils an den Auslegern 9b gelegenen Arme 9g, 9h; 9i, 9j jeweils einen Winkel von 90° zwischen sich ein. Wie bereits zu den anderen Verbindern 9.1-9.3 näher beschrieben, können auch die Arme 9c-9j des hier gezeigten Verbinders 9.4 jeweils über eine als Filmscharnier ausgebildete Biegelinie F10-F18 schwenkbar an dem Mittelsteg 9b beziehungsweise den beiden Auslegern 9b angelenkt sein. Weiterhin weisen auch diese Arme 9c-9j freie Endabschnitte E10-E17 auf, welche ebenfalls jeweils über als Filmscharnier ausgebildete Biegelinien F18-F25 schwenkbar am zugehörigen Arm 9c-9j angelenkt sein können.

Die Ausgestaltung des hier ersichtlichen Verbinders 9.4 stellt eine quasi Kombination der in Bezug auf Fig. 1 dargestellten getrennten Anordnung unterschiedlicher Verbinder 9.1-9.3 mit voneinander unterschiedlich orientierten Armen 9c-9f dar, welche neben der Verkettung der Abschirmelemente 2-7 gleichzeitig eine relative Verlagerung der Abschirmelemente 2-7 untereinander in Bezug auf die Längsrichtung X verhindert. Für letzteres sind insbesondere die mittleren Arme 9c-9f des Verbinders 9.4 gedacht, durch deren Orientierung eine zumindest begrenzte Aussteifung der Schutzabdeckung 1 in diese Richtung erreichbar ist.

Mit Blick auf Fig. 4 wird deutlich, dass die Verbinder 9.4. jeweils über ihren Mittelsteg 9a mit dem zweiten Schenkel 2b-7b des zugehörigen Abschirmelements 2-7 verbunden sind. In gleicher Weise wie bereits zu der ersten Ausführungsform der Schutzabdeckung 1 beschrieben, dienen auch hier die jeweils in Bezug auf die Hochrichtung Z in der jeweils gleichen Ebene liegenden Arme 9c-9j dazu, die Verbinder 9.4 miteinander zu verketten. Konkret sind hierzu die zwei unmittelbar benachbarten, am Mittelsteg 9a gelegenen mittleren Arme 9d, 9e mit den gleichen Armen 9d, 9e eines unmittelbar benachbarten Verbinders 9.4 verbunden, während die diese beiden Arme 9d, 9e zwischen sich einschließenden äußeren Arme 9c, 9f mit den gleichen Armen 9c, 9f eines anderen unmittelbar benachbarten Verbinders 9.4 verbunden sind. Hierzu sind die beiden mittleren Arme 9d, 9e zu dem einen Verbinder 9.4 hin verschwenkt, während die beiden äußeren Arme 9c, 9f zu dem anderen Verbinder 9.4 hin verschwenkt sind. Weiterhin sind die nah am Mittelsteg 9a gelegenen, an jeweils einem der beiden Ausleger 9b angeordneten Arme 9h, 9j zu demselben Verbinder 9.4. hin verschwenkt, zu dem auch die beiden direkt am Mittelsteg 9a gelegenen äußeren Arme 9c, 9f hin verschwenkt sind, während die vom Mittelsteg 9a weiter weg gelegenen, an jeweils einem der beiden Ausleger 9b angeordneten Arme 9g, 9i zu demselben Verbinder 9.4. hin verschwenkt sind, zu dem auch die beiden direkt am Mittelsteg 9a gelegenen mittleren Arme 9d, 9e hin verschwenkt sind.

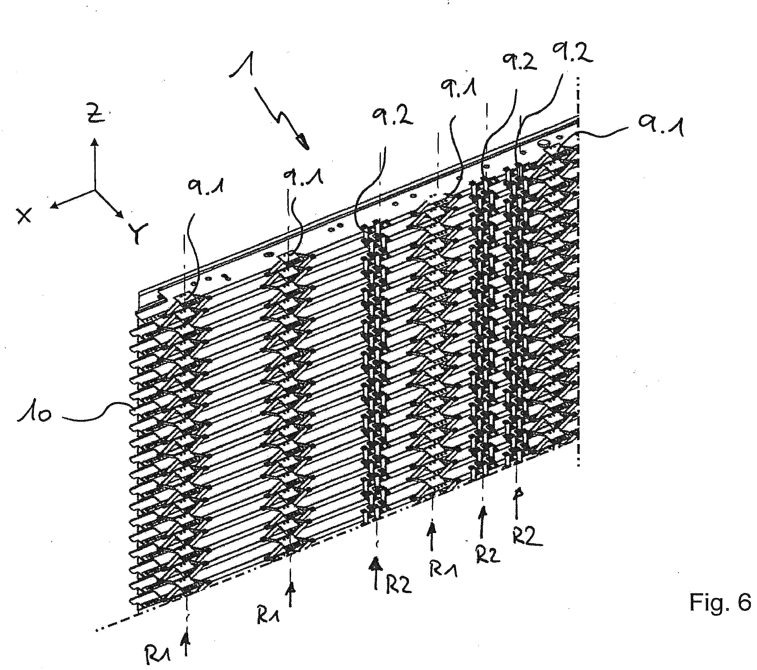

Fig. 6 zeigt einen Bereich einer weiteren alternativen Ausführungsform der Schutzabdeckung 1. Diese unterscheidet sich von der in Fig. 1 ersichtlichen Bauform durch eine veränderte Anordnung der Reihen R1, R2 mit jeweils baugleichen Verbindern 9.1-9.3.

Wie zu erkennen, wechseln sich hier die Reihen R1, R2 mit den zugehörigen Verbindern 9.1, 9.2 nicht fortlaufend ab, sondern weisen eine eigenständige Anordnung auf. Mit Bezug auf die Darstellung in Fig. 6 weist die Schutzabdeckung 1 von links her zunächst zwei Reihen R1 mit Verbindern 9.1 auf, auf die dann eine Reihe R2 mit Verbindern 9.2 folgt, auf die dann wieder eine Reihe R1 mit Verbindern 9.1 folgt, bevor sich hieran zwei Reihen R2 mit den Verbindern 9.2 anschließen usw.

Wie schon in Fig. 1 ersichtlich, können die einzelnen Abschirmelemente 2-7 der jeweilige Schutzabdeckung 1 seitliche Führungselemente 10 aufweisen, welche dann beispielsweise mit hier nicht näher ersichtlichen Führungsleisten kommunizieren. Die Arme 9c-9j der jeweiligen Verbinder 9.1 -9.3 sind über geeignete Befestigungsmittel M miteinander verbunden, bei denen es sich beispielsweise um Nieten, Schrauben, Bolzen, Rastelemente, Klammer oder auch Klebstoff oder eine Schweißung handeln kann. Selbstverständlich sind auch Kombinationen aus wenigstens zwei der genannten Ausführungsformen möglich. Das Gleiche gilt für die Verbindung der Mittelstege 9a der jeweiligen Verbinder 9.1-9.3, welche ebenfalls über derartige Befestigungsmittel M mit dem zweiten Schenkel 2b-7b des zugehörigen Abschirmelements 2-7 verbunden sind. Hierzu kann wenigsten der jeweilige zweite Schenkel 2b-7b mindestens eine entsprechende Öffnung B besitzen, durch welches sich das jeweilige Befestigungsmittel M zumindest teilweise hindurch erstrecken kann. Grundsätzlich können auch die Mittelstege 9a oder/und die Arme 9c-9j, insbesondere deren freien Endabschnitte E1-E17 derartige Öffnungen B besitzen, um Befestigungsmittel M anordnen zu können.

Die einzelnen Verbinder 9.1-9.3 sind bevorzugt jeweils aus einem plattenförmigen Grundkörper gebildet, welcher unter Ausbildung seiner Arme 9c-9j durch Materialausschnitte, Bohrungen und/oder Nuten in einzelne Bereiche aufgetrennt sein kann. Bei dem Grundkörper kann es sich beispielsweise um ein Folien- oder Plattenmaterial handeln. Die Materialausschnitte können beispielsweise durch Ausschneiden, Ausstanzen oder Ausfräsen eingebracht sein. Selbstverständlich ist auch eine Herstellung der Verbinder 9.1-9.3 mittels Spritzgießen oder eines 3D-Drucks denkbar, sofern eines dieser Verfahren entsprechende Vorteile bietet.

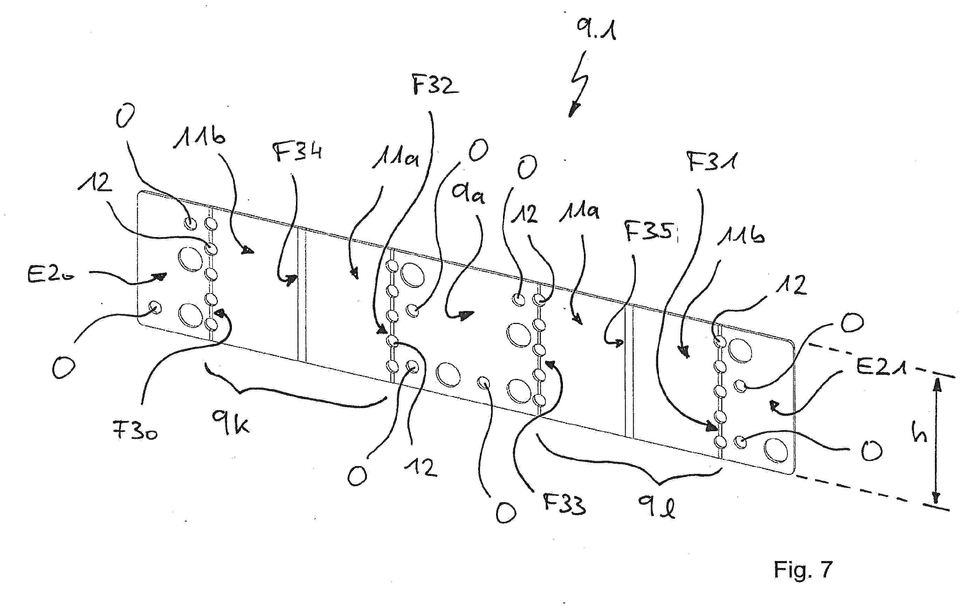

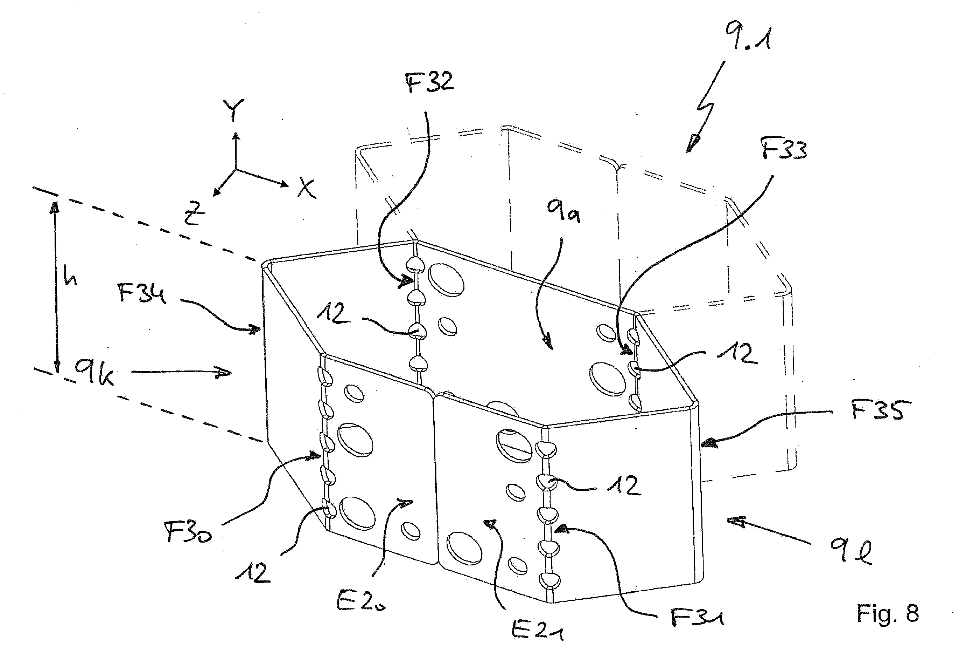

Fig. 7 ist eine alternative Ausgestaltung eines Verbinders 9.1 zu entnehmen. Dieser weist einen plattenförmigen Grundkörper mit einer Vielzahl an Biegelinien F30-F35 auf. Der Grundkörper wird vor der Anordnung des Verbinders an einem Abdeckelement 2-7 entlang seiner Biegelinien F30-F35 gefaltet (siehe Fig. 8). In Fig. 7 ist der Grundkörper zunächst ungefaltet in seiner gestreckten Form gezeigt. Der Grundkörper des Verbinders 9.1 weist einen Mittelsteg 9a auf, an den sich zwei voneinander weg weisende Arme 9k, 9l anschließen. Weiterhin weist jeder der beiden Arme 9k, 9l einen freien Endabschnitt E20, E21 auf. Zwischen dem jeweiligen freien Endabschnitt E20, E21 und dem zugehörigen Arm 9k, 9l weist der Grundkörper jeweils eine Biegelinie F30, F31 auf, woraus sich eine Schwenkbarkeit der freien Endabschnitte E20, E21 gegenüber den Armen 9k, 9l ergibt. Vorliegend erstreckt sich die jeweilige Biegelinie F30, F31 entlang einer Aneinanderreihung von sich durch den Grundkörper hindurch erstreckenden Durchgangsöffnungen 12. Hierdurch ist der Grundkörper entsprechend geschwächt, so dass sich im Betrieb eine kontrollierte Faltung entlang der so ausgebildeten Biegelinie F30, F31 einstellen kann. Weiterhin ist jeder der Arme 9k, 9l über eine gleich ausgebildete und insofern Durchgangsöffnungen 12 aufweisende Biegelinie F32, F33 gegenüber dem Mittelsteg 9a schwenkbar ausgestaltet.

Jeder der beiden Arme 9k, 9l ist über eine Biegelinie F34, F35 in zwei Armabschnitte 11a, 11b aufgeteilt. Die Biegelinien F34, F35 können im Vergleich zu den anderen Biegelinien F30, F33 einen geringeren Widerstand gegenüber einem Schwenken aufweisen, so dass sich die Armabschnitte 11a, 11b eines Arms 9k, 9l im gestauchten Zustand der Schutzabdeckung 1 möglichst nah einander annähern oder gar zumindest bereichsweise aufeinander legen lassen. Hierzu können besagte Biegelinien F34, F35 auch jeweils als ein Filmscharnier ausgebildet sein. Sowohl der Mittelsteg 9a als auch die freien Endabschnitte E20, E21 weisen mehrere Öffnungen O auf, von denen wenigstens einige der Aufnahme von hier nicht näher ersichtlichen Befestigungsmittel M dienen.

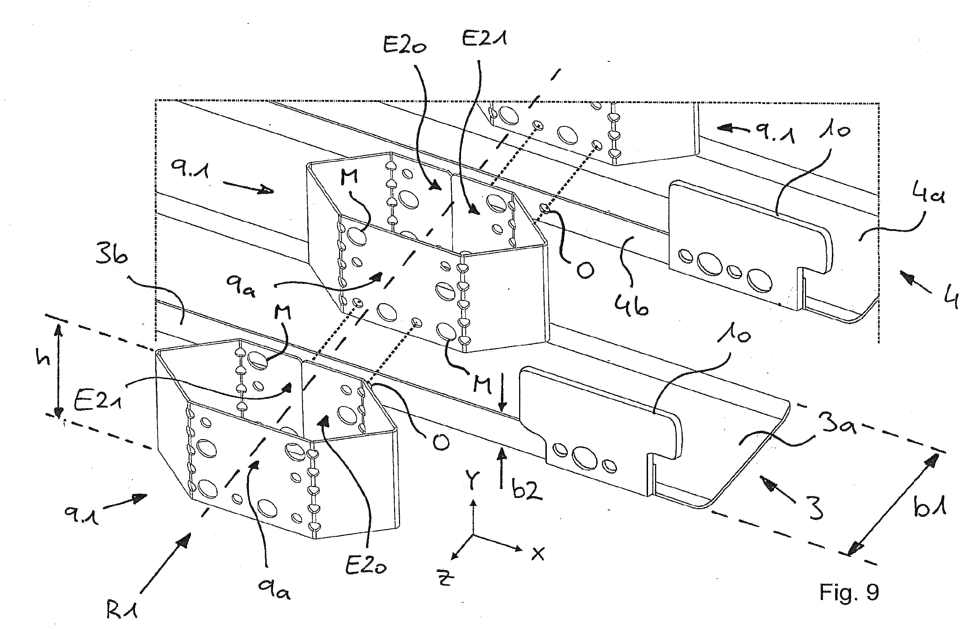

Fig. 8 zeigt den Grundkörper des Verbinders aus Fig. 7 in seinem entlang der Biegelinien F30-F35 gefalteten Einbauzustand. Wie durch unterbrochene Linien angedeutet, können die Arme 9k, 9l auch in eine entgegengesetzte Richtung abgebogen sein. Dies ist bei unmittelbar benachbarten Verbindern 9.1. stets der Fall, wie nachfolgend näher verdeutlicht (siehe Fig. 9).

Fig. 9 ist ein Ausschnitt einer alternativen Schutzabdeckung 1 in Form einer Explosionsdarstellung zu entnehmen. Beispielhaft sind zwei der Abschirmelemente 3, 4 zu erkennen, an deren Enden jeweils ein Führungselement 10 am zweiten Schenkeln 3b, 4b angeordnet ist. Die Verbinder 9.1 der hier ersichtlichen Reihe R1 sind abwechseln zueinander orientiert. Dies meint, dass deren Arme 9k, 9l in jeweils unterschiedliche Richtungen abgebogen sind, wie bereits zu Fig. 8 näher erläutert. Zudem sind die so aufeinander folgenden Verbinder 9.1 in Bezug auf die Hochrichtung Z um jeweils 180° zueinander rotiert. Die zweiten Schenkel 3b, 4b weisen Öffnungen O auf, welche mit wenigstens einigen der Öffnungen O des Mittelstegs 9a des einen Verbinders 9.1 und der freien Endabschnitte E20, E21 des anderen Verbinders 9.1 fluchten (durch unterbrochene Linien angedeutet). Auf diese Weise sind die Verbinder 9.1 über hier nicht ersichtliche Befestigungsmittel M miteinander verbindbar, welche sich dann jeweils durch die Öffnung O eines freien Endabschnitts E20, E21 eines Verbinders 9.1, durch die Öffnung O eines zweiten Schenkels 3b, 4b eines Abschirmelements 3, 4 und durch die Öffnung O des Mittelstegs 9a eines unmittelbar benachbarten Verbinders 9.1 hindurch erstrecken. Auf diese Weise ist der jeweilige zweite Schenkel 3b, 4b zumindest teilweise zwischen jeweils zwei Verbindern 9.1 eingliedert.

Das sich aus den Öffnungen O ergebende Lochbild in den Mittelstegen 9a und den freien Endabschnitten E20, E21 der einzelnen Verbinder 9.1 ist so gewählt, dass beispielsweise überstehende Köpfe der Befestigungsmittel M im gestauchten Zustand der Schutzabdeckung 1 zumindest teilweise in den größeren Öffnungen M aufnehmbar sind. Hierdurch ergibt sich ein überaus kompaktes Zusammendrückmaß. Stellvertretend für alle anderen Abschirmelemente 3-7 entspricht eine Breite b1 des jeweils zweiten Schenkels 3b, 4b eines Abschirmelements 3, 4 vorliegend von 15% bis 25%, bevorzugt von 18% bis 22%, insbesondere 20%, einer Breite b2 des jeweils zugehörigen ersten Schenkels 3a, 4a desselben Abschirmelements 3, 4.

Grundsätzlich weist zumindest der Mittelsteg 9a oder/und der erste Arm 9k oder/und der zweite Arm 9l oder/und der erste freie Endabschnitt E20 oder/und der zweite freie Endabschnitt E21 jedes Verbinders 9.1 wenigstens bereichsweise eine Höhe h auf, welche mindestens doppelt so groß wie die Breite b2 des zweiten Schenkel 3a-7a eines Abschirmelements 3, 4 ist, mit dem der Verbinder 9.1 verbunden ist. Konkret kann der Wert der Höhe h eines Verbinders 9.1 dem 2-fachen bis 4-fachen, bevorzugt dem 2,5-fachen bis 3,5-fachen, insbesondere dem 3-fachen, Wert der Breite b2 des zugehörigen zweiten Schenkels 3b-7b entsprechen.

Um eine Verkettung der Verbinder 9.1 und damit der Abschirmelemente 2-7 zu erreichen, sind die freien Endabschnitte E20, E21 eines Verbinders 9.1 und der diesen in Einbaulage zugewandte Mittelsteg 9a eines unmittelbar benachbarten Verbinders 9.1 ebenfalls durch hier nicht näher gezeigte Befestigungsmittel M miteinander verbunden. Wie aufgrund der Breite des zweiten Schenkels 3b, 4b der Abschirmelemente 3, 4 zu erkennen, erstrecken sich die Befestigungsmittel M dabei nur durch die miteinander fluchtenden Öffnungen O der jeweils zwei Verbinder 9.1.

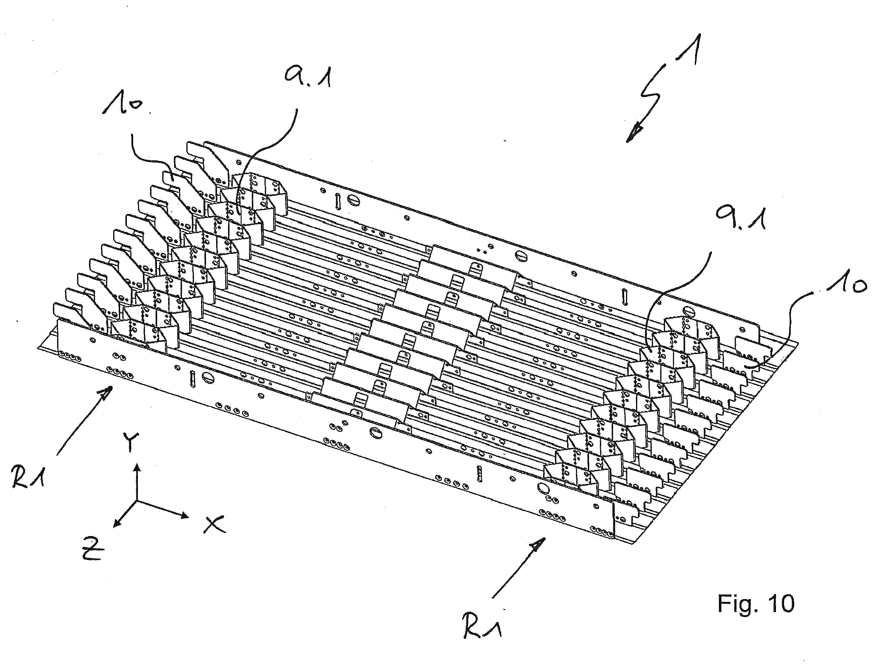

Fig. 10 verdeutlicht den komplettierten Zustand der Schutzabdeckung 1 aus vorliegend mehr als sechs Abschirmelementen 2-7 und den zuvor beschriebenen alternativen Verbindern 9.1.

## Patentansprüche

1. Schutzabdeckung (1), umfassend eine Vielzahl an, insbesondere im Querschnitt jeweils L-förmigen, Abschirmelementen (2-7), die jeweils einen ersten Schenkel (2a-7a) und wenigstens einen gegenüber ihrem ersten Schenkel (2a-7a) abgewinkelten zweiten Schenkel (2b-7b) aufweisen, wobei die zweiten Schenkel (2b-7b) so mit ihren Deckflächen einander gegenüberliegend angeordnet sind, dass die ersten Schenkel (2a-7a) der unmittelbar zueinander benachbarten Abschirmelemente (2-7), welche über ihre zugehörigen zweiten Schenkel (2b-7b) durch diese relativ zueinander beweglich miteinander koppelnde Verbinder (9.1-9.3) verkettet sind, sich zumindest teilweise unter Ausbildung einer längenveränderlichen Abschirmfläche (8) überdecken, wobei wenigstens einer der Verbinder (9.1-9.3) mindestens eine Biegelinie (F1-F8, F10-F25, F30-F35) aufweist, entlang der zumindest ein Teil dieses Verbinders (9.1-9.3) gegenüber einem anderen Teil desselben Verbinders (9.1-9.3) schwenkbar ist, **dadurch gekennzeichnet,**
**dass** jeder der Verbinder (9.1-9.3) einen mit dem zweiten Schenkel (2b-7b) eines Abschirmelements (2-7) verbundenen Mittelsteg (9a) besitzt, welcher mindestens zwei an diesem schwenkbar angeordnete Arme (9c-9l) aufweist, wobei wenigstens ein Arm (9c-9l) eines einem Abschirmelement (2-7) zugehörigen Verbinders (9.1-9.3) mit dem Arm (9c-9l) oder dem Mittelsteg (9a) eines einem anderen, insbesondere unmittelbar benachbarten, Abschirmelement (2-7) zugehörigen Verbinders (9.1-9.3) verbunden ist.

2. Schutzabdeckung (1) nach Anspruch 1,
**dadurch gekennzeichnet,**
**dass** wenigstens zwei der unterschiedlichen Abschirmelementen (2-7) zugehörigen Verbinder (9.1-9.3) jeweils wenigstens drei an ihrem Mittelsteg (9a) schwenkbar angeordnete Arme (9c-9j) aufweisen, wobei entweder der erste Arm (9c-9j) eines Verbinders (9.1-9.3) mit dem ersten Arm (9c-9j) des anderen Verbinders (9.1-9.3) und der dritte Arm (9c-9j) dieses Verbinders (9.1-9.3) mit dem dritten Arm (9c-9j) des anderen Verbinders (9.1-9.3) oder der zweite Arm (9c-9j) eines Verbinders (9.1-9.3) mit dem zweiten Arm (9c-9j) des anderen Verbinders (9.1-9.3) verbunden ist.

3. Schutzabdeckung (1) nach Anspruch 1,
**dadurch gekennzeichnet,**
**dass** wenigstens zwei der unterschiedlichen Abschirmelementen (2-7) zugehörigen Verbinder (9.1-9.3) jeweils vier an ihrem Mittelsteg (9a) schwenkbar angeordnete Arme (9c-9j) aufweisen, wobei entweder der erste Arm (9c-9j) eines Verbinders (9.1-9.3) mit dem ersten Arm (9c-9j) des anderen Verbinders (9.1-9.3) und der dritte Arm (9c-9j) dieses Verbinders (9.1-9.3) mit dem dritten Arm (9c-9j) des anderen Verbinders (9.1-9.3) oder der zweite Arm (9c-9j) eines Verbinders (9.1-9.3) mit dem zweiten Arm (9c-9j) des anderen Verbinders (9.1-9.3) und der vierte Arm (9c-9j) dieses Verbinders (9.1-9.3) mit dem vierten Arm (9c-9j) des anderen Verbinders (9.1-9.3) verbunden sind.

4. Schutzabdeckung (1) nach Anspruch 1,
**dadurch gekennzeichnet,**
**dass** wenigstens zwei der unterschiedlichen Abschirmelementen (2-7) zugehörigen Verbinder (9.1-9.3) jeweils wenigstens fünf an ihrem Mittelsteg (9a) schwenkbar angeordnete Arme (9c-9j) aufweisen, wobei entweder zwei unmittelbar benachbarte Arme (9c-9j) eines Verbinders (9.1-9.3) jeweils mit einem von zwei unmittelbar benachbarten Armen (9c-9j) des anderen Verbinders (9.1-9.3) verbunden sind oder zwei wenigstens einen Arm (9c-9j) zwischen sich einschließende Arme (9c-9j) eines Verbinders (9.1-9.3) jeweils mit einem von zwei wenigstens einen Arm (9c-9j) zwischen sich einschließende Arme (9c-9j) des anderen Verbinders (9.1-9.3) verbunden sind.

5. Schutzabdeckung (1) nach einem der vorhergehenden Ansprüche,
**dadurch gekennzeichnet,**
**dass** die Arme (9c-9j) eines Verbinders (9.1-9.3) an derselben Kante (K3, K4) des Mittelstegs (9a) angeordnet sind oder dass wenigstens ein Arm (9c-9l) eines Verbinders (9.1-9.3) an einer Kante (K3, K4) des Mittelstegs (9a) angeordnet ist, wobei wenigstens ein anderer Arm (9c-9l) desselben Verbinders (9.1-9.3) an einer dieser Kante (K3, K4) abgewandten Kante (K3, K4) des Mittelstegs (9a) angeordnet ist.

6. Schutzabdeckung (1) nach einem der vorhergehenden Ansprüche,
**gekennzeichnet durch**
eine unterschiedliche Orientierung wenigstens zweier Arme (9c-9j) desselben Verbinders (9.1-9.3) zueinander derart, dass diese Arme (9c-9j) jeweils in einer von zwei einen, insbesondere rechten, Winkel zwischen sich einschließenden Ebenen schwenkbar sind.

7. Schutzabdeckung (1) nach einem der vorhergehenden Ansprüche,
**dadurch gekennzeichnet,**
**dass** der Mittelsteg (9a) wenigstens eines Verbinders (9.1-9.3) einen sich von diesem weg erstreckenden Ausleger (9b) aufweist, wobei wenigstens einer der Arme (9c-9j) im Bereich, insbesondere an einer Kante (K1, K2), dieses Auslegers (9b) angeordnet ist.

8. Schutzabdeckung (1) nach einem der vorhergehenden Ansprüche,
**dadurch gekennzeichnet,**
**dass** die Arme (9c-9j) der Verbinder (9.1-9.3), insbesondere schwenkbare, freie Endabschnitte (E1-E4, E10-E17) aufweisen, wobei die unmittelbar miteinander in Kontakt stehenden Arme (9c-9j) zweier Verbinder (9.1-9.3) über ihre freien Endabschnitte (E1-E4, E10-E17) miteinander verbunden sind.

9. Schutzabdeckung (1) nach einem der vorhergehenden Ansprüche,
**dadurch gekennzeichnet,**
**dass** wenigstens einer der Verbinder (9.1-9.3) aus einem plattenförmigen Grundkörper gebildet ist, wobei der jeweilige Grundkörper unter Ausbildung der Arme (9c-9j) durch Materialausschnitte in einzelne Bereiche aufgetrennt ist oder/und der Grundkörper mindestens eine Biegelinie (F30-F35) aufweist, entlang der zumindest ein Teil des Verbinders (9.1) gegenüber einem anderen Teil desselben Verbinders (9.1) schwenkbar ist.

10. Schutzabdeckung (1) nach einem der vorhergehenden Ansprüche,
**dadurch gekennzeichnet,**
**dass** die Arme (9k, 9l) der Verbinder (9.1), insbesondere schwenkbare, freie Endabschnitte (E20, E21) aufweisen, wobei wenigstens einer der Arme (9k, 9l) eines Verbinders (9.1) über seinen freien Endabschnitt (E20, E21) mit dem Mittelsteg (9a) eines, insbesondere unmittelbar, benachbarten Verbinders (9.1) verbunden ist.

11. Schutzabdeckung (1) nach einem der vorhergehenden Ansprüche,
**dadurch gekennzeichnet,**
**dass** wenigstens einer der Arme (9k, 9l) eines Verbinders (9.1) zwei gegeneinander schwenkbare Armabschnitte (11a, 11b) besitzt, wobei dieser Arm (9k, 9l) über seinen ersten Armabschnitt (11a) mit dem Mittelsteg (9a) verbunden ist und der freie Endabschnitt (E20, E21) an seinem zweite Armabschnitt (11b) angeordnet ist.

12. Schutzabdeckung (1) nach einem der vorigen Ansprüche,
**dadurch gekennzeichnet,**
**dass** wenigstens eine der Biegelinien (F1-F8, F10-F25, F30-F35), insbesondere bei einer Schutzabdeckung (1) nach einem der Ansprüche 1-8, auf mindestens eine der nachfolgend genannten Arten gebildet ist:
- durch ein, insbesondere lückenloses, Filmscharnier,
- durch eine in das Material des Verbinders (9.1-9.3) hinein gerichtete Prägung,
- durch eine in das Material des Verbinders (9.1-9.3) hinein gerichtete Querschnittskomprimierung,
- durch einen begrenzten Materialabtrag; oder dass wenigstens eine der Biegelinien (F30-F35) ), insbesondere bei einer Schutzabdeckung (1) nach einem der Ansprüche 9-11, mindestens eine der nachfolgend genannten Eigenschaften aufweist:
- Ausbildung durch ein, insbesondere lückenloses, Filmscharnier,
- Erstreckung entlang eines zumindest teilweisen Materialabtrags,
- Erstreckung entlang einer Aneinanderreihung von sich durch den Grundkörper hindurch erstreckenden Durchgangsöffnungen (12).

13. Schutzabdeckung (1) nach einem der vorhergehenden Ansprüche,
**dadurch gekennzeichnet,**
**dass** der Mittelsteg (9a) und wenigstens ein freier Endabschnitt (E20, E21) zweier unmittelbar zueinander benachbarter Verbinder (9.1) jeweils zumindest eine, insbesondere kreisrunde, Öffnung (O) besitzen, wobei der Mittelsteg (9a) des einen Verbinders (9.1) und der freie Endabschnitt (E20, E21) des anderen Verbinders (9.1) unter Zwischenschaltung des zweiten Schenkels (2b-7b) eines zugehörigen Abschirmelements (2-7)durch mindestens ein sich zumindest teilweise durch deren Öffnungen (O) hindurch erstreckendes Befestigungsmittel (M) verbunden sind.

14. Schutzabdeckung (1) nach einem der vorhergehenden Ansprüche,
**dadurch gekennzeichnet,**
**dass** zwei unmittelbar benachbarte Verbinder (9.1) einer Reihe (R1) einen baugleichen Grundkörper aufweisen und in Bezug auf die Hochrichtung (Z) um 180° zueinander rotiert eingebaut sind, wobei die Arme (9k, 9l) des einen Verbinders (9.1) gegenüber den Armen (9k, 9l) des anderen Verbinders (9.1) in voneinander unterschiedliche Richtungen gegenüber dem jeweiligen Mittelsteg (9a) verschwenkt sind.

15. Schutzabdeckung (1) nach einem der vorhergehenden Ansprüche,
**dadurch gekennzeichnet,**
**dass** die freien Endabschnitte (E20, E21) wenigstens eines Verbinders (9.1) einander zugewandt sind, insbesondere einen Kontakt zueinander aufweisen.
